# EUROPÄISCHE PATENTSCHRIFT

(11) **EP 2 786 038 B1**
(45) Veröffentlichungstag und Bekanntmachung des Hinweises auf die Patenterteilung: **26.09.2018**
(21) Anmeldenummer: 12794248.0
(22) Anmeldetag: 21.11.2012
(51) Int. Cl.: F16D 65/18, F16D 65/56, F16D 121/14, F16D 125/28, F16D 131/00

(54) **FUNKTIONSEINHEIT ZUM NACHSTELLEN EINES BREMSBELAGES EINER SCHEIBENBREMSE**
FUNCTIONAL UNIT FOR ADJUSTING A BRAKE PAD OF A DISC BRAKE
UNITÉ FONCTIONNELLE DE RATTRAPAGE DE JEU D'UNE GARNITURE DE FREIN D'UN FREIN À DISQUE

(30) Priorität: 30.11.2011 DE 102011119768
(43) Veröffentlichungstag der Anmeldung: 08.10.2014
(73) Patentinhaber: KNORR-BREMSE Systeme für Nutzfahrzeuge GmbH, 80809 München (DE)
(72) Erfinder: WEBER, Ralf, 80992 München (DE); KLINGNER, Matthias, 82272 Moorenweis (DE)
(86) Internationale Anmeldenummer: PCT/EP2012/073207
(87) Internationale Veröffentlichungsnummer: WO 2013/079376

(56) Entgegenhaltungen:
- EP-A2- 1 160 476
- DE-A1- 10 307 657
- US-B2- 6 659 235

## Beschreibung

Die Erfindung betrifft eine Funktionseinheit zum Nachstellen eines Bremsbelages einer Scheibenbremse nach dem Oberbegriff des Anspruchs 1.

Diese Funktionseinheit ist mit ihren wesentlichen Funktionsteilen im Inneren eines Bremssattels angeordnet, wobei über die Brücke, an der ein Bremshebel anliegt, die darüber aufgebrachte Bremskraft auf einen anliegenden Bremsbelag übertragen wird, der im Fall einer Bremsung gegen eine Bremsscheibe pressbar ist.

Hierzu sind auf der dem Bremshebel gegenüberliegende Seiten den Stellspindeln Druckstücke zugeordnet zur Anlage am Bremsbelag.

Zum Ausgleich eines sich verschleißbedingt verändernden Lüftspiels zwischen dem Bremsbelag und der Bremsscheibe werden die Stellspindeln in Richtung der Bremsscheibe bewegt, wozu in die eine der als Gewinderohr ausgebildeten Stellspindeln ein Nachsteller eingreift, der bei Betätigung des Bremshebels die Stellspindel verdreht.

Um beide Stellspindeln gleichmäßig zu verdrehen, ist eine Synchronisiereinrichtung vorgesehen, die als Zugmittelantrieb an beiden Stellspindeln verdrehsicher angeordnet ist.

Dabei besteht der Zugmitteltrieb aus zwei Treibrädern, von denen jeweils eines verdrehfest, jedoch axial verschiebbar an einer zugeordneten Stellspindel gehalten ist, während ein Zugmittel, vorzugsweise eine Gliederkette, ein Zahnriemen, ein Lochband oder eine Perlenschnur, formschlüssig in eine Außenverzahnung der Treibräder eingreift. Die Synchronisation der beiden Stellspindeln derart, dass der angeschlossene Bremsbelag mit durchgehend gleichem Spaltmaß gegenüber der Bremsscheibe verläuft, erfolgt bislang nach einem weitgehenden Zusammenbau der Scheibenbremse.

Probleme ergeben sich jedoch, wenn Bauteile der im Inneren des Bremssattels positionierten Mechanik beschädigt sind. Zu deren Reparatur bzw. deren Austausch muss der Bremssattel auf seiner der Bremsscheibe zugewandten Seite geöffnet werden, wo er durch eine mit dem Bremssattel verschraubte Verschlussplatte abgedichtet ist.

Dabei sind Durchgangsöffnungen der Verschlussplatte für die Stellspindeln jeweils durch einen Faltenbalg verschlossen, der einerseits an der Stellspindel und andererseits an der Verschlussplatte gehalten ist. Auch diese Faltenbälge müssen entfernt werden, ebenso wie die einzelnen Komponenten der gattungsgemäßen Funktionseinheit.

Da ein Austausch der beschädigten Teile auf Grund der arbeitsintensiven Demontage und Montage einschließlich der sicherheitsrelevanten Einstellung der Funktionseinheit, insbesondere einer neuerlichen Synchronisation der Stellspindeln, praktisch nicht möglich ist, wird üblicherweise die gesamte Scheibenbremse ausgetauscht.

Naturgemäß stellt dies in betriebswirtschaftlicher Hinsicht einen äußert unbefriedigenden Zustand dar.

In der US 6 659 235 B2 ist eine Funktionseinheit offenbart, bei der die Synchronisiereinrichtung ein Zahnradgetriebe aufweist, mit dem eine synchrone Verstellung der Stellspindeln zum Ausgleich eines Lüftspiels erfolgt.

Aus der EP 1 160 476 A2 ist eine Funktionseinheit zum Nachstellen eines Bremsbelages einer Scheibenbremse bekannt, mit einer Synchronisiereinrichtung, die einen Zugmitteltrieb mit zwei Treibrädern aufweist, die über ein Zugmittel in Form einer Kette antreibbar sind, wobei die Treibräder jeweils mit einer Stellspindel in Wirkverbindung stehen.

Der Erfindung liegt die Aufgabe zugrunde, eine Funktionseinheit der gattungsgemäßen Art so weiter zu entwickeln, dass ein wirtschaftlicherer Betrieb der Scheibenbremse, insbesondere durch Reduzierung von Reparaturkosten, möglich wird.

Diese Aufgabe wird durch eine Funktionseinheit mit den Merkmalen des Anspruchs 1 gelöst.

Dadurch, dass gemäß der Erfindung die Funktionseinheit, vor allem mit den Funktionsteilen Brücke, darin dreh- und axialbewegbar gehaltenen, parallel und abständig zueinander angeordneten Stellspindeln und einer Synchronisiereinrichtung zu einer Baugruppe vormontiert sind, ergeben sich eine ganze Reihe von Vorteilen.

So kann die funktionsgemäße Einstellung der Synchronisiereinrichtung werkseitig vorgenommen werden, was naturgemäß die Montage der Funktionseinheit wesentlich vereinfacht.

Dabei besteht die Synchronisiereinrichtung aus den in der Beschreibungseinleitung definierten Bauteilen, vor allem einem Zugmitteltrieb, der nach einem weiteren Gedanken der Erfindung an der Austrittsseite der Stellspindeln aus der Brücke angeordnet ist. Denkbar ist jedoch auch die Anordnung des Zugmitteltriebs an der gegenüberliegenden Seite der Brücke, jedoch innerhalb des Bremssattels. Die Treibräder sind bei diesem Zugmitteltrieb so ausgebildet, dass eine diesem gegenüber axiale Verstellung der Stellspindeln möglich ist, andererseits die Treibräder verdrehfest an den Stellspindeln angeschlossen sind.

Zum anderen sind die Treibräder, bezogen auf die Längsachsrichtung der Stellspindel, axial gesichert, allerdings verdrehbar an der Brücke gelagert.

Neben der einfacheren Montage zeichnet sich die Erfindung auch dadurch aus, dass andere, im Bremssattel angeordnete Funktionsteile, beispielsweise eine Zuspanneinrichtung, im Bedarfsfall, namentlich bei einem notwendigen Austausch, problemlos entnommen und ersetzt werden können, da die vormontierte Baugruppe, die als Funktionseinheit baulich zusammengesetzt vorliegt, problemlos aus dem Bremssattel entnommen werden kann, sodass ein freier Zugriff auf das Innere des Bremssattels möglich ist.

Im Folgenden kann, nach Austausch des entsprechenden Funktionsteiles, die Baugruppe entweder komplett neu oder die lediglich herausgenommene, funktionstüchtige wieder eingesetzt werden.

Als besonders vorteilhaft ist eine weitere Ausbildung der Erfindung anzusehen, bei der die Verschlussplatte und die Faltenbälge gleichfalls als Funktionsteile bei der Vormontage der Baugruppe berücksichtig werden.

Die ordnungsgemäße Einstellung der Synchronisiereinrichtung ist beispielsweise durch Anbringen einer Originalitätsmarkierung erkennbar, beispielsweise im Sinne eines Siegels, die nach der werkseitigen Einstellung vorzugsweise im Nahtbereich zwischen zwei relativ zueinander bewegbaren Funktionsteilen angebracht wird.

Denkbar ist aber auch, die vormontierte Verschlussplatte und die Brücke durch eine Versiegelung oder eine Verplombung miteinander zu koppeln. In jedem Fall ist gewährleistet, dass eine komplettierte Baugruppe im Originalzustand zum Einsatz kommt.

Weitere vorteilhafte Ausbildungen der Erfindung sind in den Unteransprüchen gekennzeichnet.

Es zeigen:

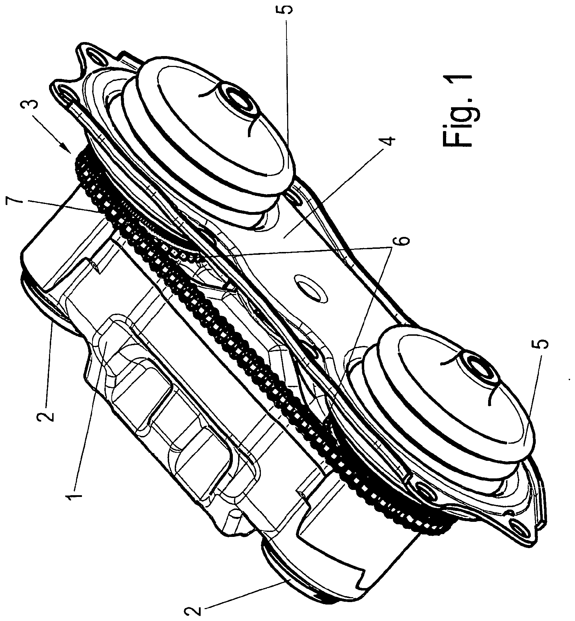

- Figur 1: eine zu einer Baugruppe zusammengefasste Funktionseinheit gemäß der Erfindung in einer perspektivischen Ansicht

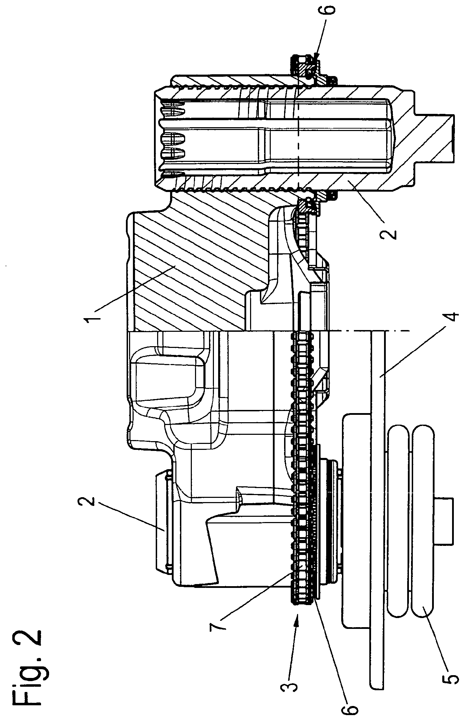

- Figur 2: einen Teil der Baugruppe nach Figur 1 als Halbschnitt in einer Draufsicht dargestellt.

In den Figuren ist eine Funktionseinheit zum Nachstellen eines Bremsbelages einer Scheibenbremse dargestellt mit folgenden Funktionsteilen: Einer Brücke 1, in der zwei parallel und abständig zueinander angeordnete Stellspindeln 2 axial bewegbar gehalten sind, sowie einer Synchronisiereinrichtung 3 zum synchronen Verstellen der Stellspindeln 2.

An den freien Enden der Stellspindeln 2, die in Verstellrichtung aus der Brücke 1 ragen, ist eine Verschlussplatte 4 angeordnet, die mit einem nicht gezeigten Bremssattel der Scheibenbremse verschraubbar ist und mit der das Innere des Bremssattels gegenüber der Umgebung abgedichtet wird.

Durchtrittsöffnungen der Verschlussplatte 4 im Bereich der Stellspindeln 2 sind jeweils durch einen Faltenbalg 5 verschlossen, der einerseits an der Stellspindel 2 und andererseits an der Verschlussplatte 4 gehalten ist.

Die Brücke 1, die Stellspindeln 2, die im Übrigen als Gewinderohre in die Brücke 1 eingeschraubt sind, die Synchronisiereinrichtung 3 sowie die Verschlussplatte 4 mit angeschlossenen Faltenbälgen 5 sind erfindungsgemäß zu einer Baugruppe vormontiert.

Die Synchronisiereinrichtung 3 ist an der Brücke 1 angeordnet und wird durch einen Zugmitteltrieb gebildet, bestehend aus zwei Treibrädern 6, von denen jeweils eins in eine der Stellspindeln 2 eingreift, sowie einem Zugmittel 7, im Beispiel eine Gliederkette, die in eine Stirnverzahnung der Treibräder 6 eingreift.

Im Übrigen kann zwischen der Verschlussplatte 4 und der Brücke 1 noch eine Druckfeder positioniert sein, mit der die Brücke 1 samt darin angeordneter Stellspindeln 2 und der Synchronisiereinrichtung 3 nach einem Lösen der Bremse in eine Ausgangsstellung zurück drückbar ist.

Daneben kann als weiteres Funktionsteil ein Spanner an das Zugmittel 7 angreifen, mit dem dessen Trume spannbar sind.

### Bezugszeichenliste

- 1.: Brücke
- 2.: Stellspindeln
- 3.: Synchronisiereinrichtung
- 4.: Verschlussplatte
- 5.: Faltenbalg
- 6.: Treibräder
- 7.: Zugmittel

## Patentansprüche

1. Funktionseinheit zum Nachstellen eines Bremsbelages einer Scheibenbremse, mit folgenden Funktionsteilen:
- einer Brücke (1),
- zwei in der Brücke parallel und abständig zueinander angeordneten und axial bewegbar gehaltenen Stellspindeln (2), sowie
- einer Synchronisiereinrichtung (3) zum synchronen Verstellen der Stellspindeln (2),
- einem Zugmitteltrieb der Synchronisiereinrichtung (3), mit Treibrädern (6), jeweils mit einer Stirnverzahnung, in die ein Zugmittel (7) eingreift,
wobei die Treibäder (6), bezogen auf die Längsachse der Stellspindeln (2), axial gesichert und verdrehbar an der Brücke (1) gehalten sind, wobei die Funktionsteile zu einer Baugruppe vormontiert sind,
**dadurch gekennzeichnet, dass**
die Treibäder an den Stellspindeln (2) verdrehsicher, diesen gegenüber jedoch axial verstellbar gehalten sind,
die Baugruppe eine im benachbarten Bereich zweier relativ zueinander bewegbarer Funktionsteile angeordnete Originalitätsmarkierung aufweist,
und die Stellspindeln (2) bei der Vormontage synchronisiert sind.

2. Funktionseinheit nach Anspruch 1, **dadurch gekennzeichnet, dass** eine Verschlussplatte (4) mit jeweils einem einer Stellspindel (2) zugeordneten Faltenbalg (5) zur Abdeckung der der Brücke (1) abgewandten Enden der Stellspindeln (2) Bestandteil der vormontierten Baugruppe sind.

3. Funktionseinheit nach Anspruch 1 oder 2, **dadurch gekennzeichnet, dass** die Originalitätsmarkierung im Sinne eines Siegels ausgebildet ist.

4. Funktionseinheit nach einem der vorhergehenden Ansprüche, **dadurch gekennzeichnet, dass** bei der vormontierten Baugruppe die Verschlussplatte (4) und die Brücke (1) durch eine Verplombung oder Versiegelung miteinander gekoppelt sind.

## Claims

1. Functional unit for adjusting a brake pad of a disk brake, having the following functional parts:
- a guide rail (1),
- two control spindles (2) which are arranged parallel to and at a distance from one another in the guide rail and are held in an axially movable manner, and
- a synchronising device (3) for the synchronous adjustment of the control spindles (2),
- a traction mechanism drive of the synchronising device (3) with drive gears (6), each having a spur toothing system with which a traction mechanism (7) engages,
wherein the drive gears (6) are held on the guide rail (1) in an axially secured and rotatable manner relative to the longitudinal axis of the control spindles (2), wherein the functional parts are preassembled to form a module,
**characterised in that**
the drive gears are held non-rotatably but axially displaceably relative thereto on the control spindles (2),
the module has an authenticity marking in the region of two adjacent functional parts which are movable relative to each other,
and the control spindles (2) are synchronised during the preassembly process.

2. Functional unit according to claim 1, **characterised in that** a closure plate (4) with in each case one bellows (5) which is assigned to a control spindle (2) for covering those ends of the control spindles (2) which face away from the guide rail (1) is a constituent part of the preassembled module.

3. Functional unit according to claim 1 or 2, **characterised in that** the authenticity marking is designed in the manner of a seal.

4. Functional unit according to any of the preceding claims, **characterised in that,** in the preassembled module, the closure plate (4) and the guide rail (1) are coupled to one another by a lead seal or a seal.

## Revendications

1. Unité fonctionnellement d'ajustement d'une garniture de frein d'un frein à disque comportant les parties fonctionnelles suivantes :
- un pont (1)
- deux broches (2) d'ajustement disposées dans le pont parallèles et à distance l'une de l'autre en étant maintenues mobiles axialement, ainsi que
- un dispositif (3) de synchronisation pour l'ajustement synchronisé des broches (2) d'ajustement,
- un mécanisme de traction du dispositif (3) de synchronisation comportant des roues (6) d'entraînement ayant chacune un engrenage frontal dans lequel engrène un moyen (7) de traction,
dans lequel les roues (6) d'entraînement sont maintenues, par rapport à l'axe longitudinal' des broches (2) d'ajustement, verrouillées axialement et pouvant tourner sur le pont (1), les parties fonctionnelles étant montées préalablement en un module,
**caractérisée en ce que**
les roues d'entraînement sont maintenues verrouillées en rotation sur les broches (2) d'ajustement mais cependant en pouvant être déplacées axialement par rapport à celles-ci,
le module comporte un marquage de preuve contre le trifouillage disposé dans une région voisine de deux parties fonctionnelles mobiles l'une par rapport à l'autre, et les broches (2) d'ajustement sont synchronisées lors du montage préalable.

2. Unité fonctionnelle suivant la revendication 1, **caractérisée en ce qu'**elle comporte des plaques (4) de fermeture comportant chacun un soufflet (5) associé à une broche (2) d'ajustement respective pour recouvrir l'extrémité de la broche (2) du côté opposé au pont (1) qui forment des composants du module préassemblé.

3. Unité fonctionnelle suivant la revendication 1 ou 2, **caractérisée en ce que** le marquage de preuve contre le trifouillage est réalisé sous la forme d'un sceau.

4. Unité fonctionnelle suivant l'une des revendications précédentes, **caractérisée en ce que** dans le module préassemblé la plaque (4) de fermeture et le pont (1) sont couplés mutuellement par un scellement ou un plombage.
